# EUROPÄISCHE PATENTANMELDUNG

(11) **EP 3 470 973 A1**
(43) Veröffentlichungstag der Anmeldung: **17.04.2019**
(21) Anmeldenummer: 18199240.5
(22) Anmeldetag: 09.10.2018
(51) Int. Cl.: G06F 3/12, H04N 1/00, G06F 21/60

(54) **VERFAHREN ZUM BETREIBEN EINES DRUCKSYSTEMS ZUM AUSDRUCKEN VON BILDERN UND/ODER DOKUMENTEN SOWIE DRUCKSYSTEM ZUM DURCHFÜHREN DES VERFAHRENS**

(30) Priorität: 13.10.2017 DE 102017123938
(71) Anmelder: di support GmbH, 65760 Eschborn (DE)
(72) Erfinder: Naruhn, Ralph, 63303 Dreieich (DE); Schaub, Gordon, 61440 Oberursel (DE)
(74) Vertreter: Patentanwälte Olbricht Buchhold Keulertz

(57) **Zusammenfassung**

Die Erfindung betrifft ein Verfahren zum Betreiben eines Drucksystems zum Ausdrucken von Bildern und/oder Dokumenten sowie ein Drucksystem zur Durchführung des Verfahrens, wobei das Drucksystem (1) mindestens ein Druckmodul (2) mit einem Drucker, einer Bedienerschnittstelle (12) und einem Rechner aufweist. Zur Freigabe eines vorab übermittelten Druckauftrages wird ein maschinenlesbarer Code über eine Kamera (14) des Druckmoduls (2) eingelesen.

## Beschreibung

Die Erfindung betrifft ein Verfahren zum Betreiben eines Drucksystems zum Ausdrucken von Bildern und/oder Dokumenten sowie ein Drucksystem zum Durchführen des Verfahrens.

Derartige Drucksysteme werden beispielsweise auch als "Printterminals" oder "Sofortprint-Kiosk" bezeichnet und kommen beispielsweise in Einzelhandelsgeschäften wie Drogerieketten, Supermärkten und ähnlichem zum Einsatz, um Kunden einen Ausdruck ihrer digitalen Bilder von einem Endgerät wie beispielsweise von einem Mobiltelefon bzw. Smartphone zu ermöglichen. Häufig weisen die bekannten Drucksysteme auch eine Lesemöglichkeit für digitale Speichermedien wie beispielsweise USB-Sticks oder Speicherkarten auf.

Die Auswahl der zu druckenden Bilder erfolgt in der Regel nach Verbinden des Mobiltelefons bzw. Anschließen des Speichermediums über eine Bedienerschnittstelle des Drucksystems, wobei das Bild dann anschließend über einen der Bedienerschnittstelle zugewiesenen Drucker des Drucksystems ausgegeben wird. Der entsprechende Drucker wird bei diesem Vorgehen durch die üblicherweise zeitintensive Auswahl der zu druckenden Bilder und gegebenenfalls der Festlegung von Bildausschnitten und weiteren Nachbearbeitungen relativ lange blockiert.

Eine bekannte Lösung bei stationären Endgeräten sieht vor, dass der Druckauftrag mit den zu druckenden Bildern bzw. Dokumenten beispielsweise über das Internet auf einen zentralen Server geladen wird. Der Druckauftrag wird dann dort abgearbeitet und die ausgedruckten Bilder bzw. Dokumente an den Benutzer versendet. Alternativ werden die Bilder bzw. Dokumente beispielsweise in einem vorher zu bestimmenden Ladengeschäft hinterlegt und können dort vom Benutzer abgeholt werden.

Die bekannten Lösungen arbeiten an sich zufriedenstellend, bieten aber nur eine geringe Flexibilität. Ferner müssten für eine zügigere Abwicklung relativ viele Drucker und Bedienerschnittstellen vorgehalten werden, was jedoch aus Platz- und Kostengründen oft nicht möglich ist.

Der Erfindung liegt nun die Aufgabe zu Grunde, die Nachteile des Stands der Technik zu beseitigen und ein Verfahren zum Betreiben eines Drucksystems und ein entsprechendes Drucksystem bereit zu stellen, das relativ einfach skalierbar ist, wobei durch einen Benutzer erforderliche Bedienzeiten geringgehalten werden.

Bei einem Verfahren zum Betreiben eines Drucksystems zum Ausdrucken von Bildern und/oder Dokumenten, wobei das Drucksystem mindestens ein Druckmodul mit einem Drucker, einer Bedienerschnittstelle und einem Rechner aufweist, ist erfindungsgemäß vorgesehen, dass zur Freigabe eines vorab übermittelten Druckauftrages ein maschinenlesbarer Code über eine Kamera des Druckmoduls eingelesen wird.

Die Erstellung des Druckauftrags, also insbesondere die Auswahl und gegebenenfalls Nachbearbeitung der Bilder und/oder Dokumente, erfolgt dabei ohne direkte Inanspruchnahme eines Druckers des Drucksystems. Dementsprechend können theoretisch beliebig viele Nutzer zeitgleich Druckaufträge auf ihrem eigenen Endgerät erstellen und übermitteln. Nach Übermittlung des Druckauftrags wird dann ein maschinenlesbarer Code erzeugt und an das Endgerät des Nutzers gesendet. Mit diesem maschinenlesbaren Code, also beispielsweise einem sogenannten QR-Code oder einem anderen zweidimensionalen Code, geht der Benutzer dann zum gewünschten Druckmodul und lässt den Code über dessen Kamera einlesen. Damit erfolgen sozusagen die Aktivierung des Druckauftrags und die Ausgabe der Bilder bzw. Dokumente über dessen Drucker. Dabei ist die Bedienung denkbar einfach, da der maschinenlesbare Code einfach vom Drucksystem ausgelesen wird, ohne dass eine oft fehleranfällige Eingabe durch den Benutzer erforderlich ist. Ferner erfolgt die Fertigstellung der Bilder bzw. Dokumente in räumlicher Nähe zur Bedienerschnittstelle des Druckmoduls unmittelbar nach Einlesen des Codes, so dass der Benutzer die Bilder bzw. Dokumente direkt entnehmen kann. Das Risiko von Verwechslungen der Bilder bzw. Dokumente wird so geringgehalten.

Vorzugsweise wird vom Drucksystem ein drahtloses Zugangsnetzwerk bereitgestellt. Über dieses Zugangsnetzwerk sind dann alle Druckmodule des Drucksystems eingebunden, so dass sichergestellt werden kann, dass durch den Benutzer ein beliebiges Druckmodul nach Übertragung des Druckauftrags zum Drucksystem ausgewählt werden kann. Ferner bietet ein drahtloses Zugangsnetzwerk nach einem der bekannten Standards, also ein sogenanntes WLan, den Vorteil, dass keine physische Verbindung zwischen einem Endgerät des Benutzers und dem Drucksystem hergestellt werden muss. Vielmehr ist der Zugang für alle WLan fähigen Endgeräte, wie beispielsweise Mobiltelefone bzw. Smartphones, Tablets oder Laptops, herstellerunabhängig ohne weitere Adapter oder ähnlichem möglich, wobei auch mehr Endgeräte gleichzeitig Zugang zum Netzwerk bekommen können, als das Drucksystem Druckmodule zur Verfügung stellt.

Bei einer bevorzugten Weiterbildung wird vom Drucksystem ein Web-Zugang gehostet, der einen browserbasierten Zugang zum Erstellen des Druckauftrags bereitstellt. Das Erstellen des Druckauftrags beinhaltet dabei insbesondere die Auswahl und das Hochladen der Bilder und/oder Dokumente, das am Endgerät des Benutzers, also beispielsweise an einem Mobiltelefon, erfolgen kann. Durch den browserbasierten Zugang kann dabei das Erstellen und Übertragen des Druckauftrags plattformunabhängig und ohne Installation eines speziellen Programms erfolgen.

Alternativ oder zusätzlich kann vorgesehen sein, dass die Erstellung des Druckauftrags in einem Programm insbesondere offline erfolgen kann, wobei der Druckauftrag zu einem späteren Zeitpunkt zum Drucksystem oder einem mit dem Drucksystem zugeordneten Server übertragen werden. Ein derartiges Programm kann dabei gegebenenfalls zusätzliche Funktionen bereitstellen und auch dann genutzt werden, wenn sich der Benutzer außerhalb eines Zugangs zu dem vom Drucksystem bereit gestellten Zugangsnetzes befindet.

Vorzugsweise wird der maschinenlesbare Code beim Hochladen des Druckauftrags zum Drucksystem oder einem dem Drucksystem zugeordneten Server erzeugt und an das hochladende Endgerät übermittelt wird. Auf dem Endgerät kann der Code dann gespeichert, angezeigt oder ausgedruckt werden und zu einem beliebigen Zeitpunkt über die Kamera des Drucksystems eingelesen werden. Bis dahin ist der Druckauftrag zwar bereits übermittelt, zur Freigabe und damit zum Drucken der Bilder bzw. Dokumente ist aber der zuvor übermittelte Code erforderlich. Das Ausdrucken fremder Bilder oder Dokumente ist so nahezu ausgeschlossen.

In einer bevorzugten Ausgestaltung wird der maschinenlesbare Code auf ein Mobiltelefon übertragen und über die Kamera des Drucksystems von einer Anzeige des Mobiltelefons ausgelesen. Das Mobiltelefon stellt dabei ein mobiles Endgerät dar, von dem gegebenenfalls vorher auch der Druckauftrag an das Drucksystem übermittelt wurde. Der maschinenlesbare Code steht damit dem Benutzer unmittelbar nach Übertragung des Druckauftrags zur Verfügung, so dass er das entsprechende Druckmodul zum Erstellen der Bilder und/oder Dokumente direkt oder später auswählen kann. Dabei kann das Mobiletelefon mit seiner Anzeige einfach vor die Kamera des Drucksystems gehalten werden, so dass insbesondere kein vorheriges Ausdrucken des Codes erforderlich ist.

In einer alternativen oder zusätzlichen Ausgestaltung kann vorgesehen sein, dass der maschinenlesbare Code auf ein Druckmedium aufgebracht wird und von dort über die Kamera des Drucksystems ausgelesen wird. Damit kann das Drucksystem auch mit stationären Endgeräten genutzt werden, die den Druckauftrag beispielsweise über das Internet an das Drucksystem übertragen, wobei der Benutzer mit dem auf dem Druckmedium aufgebrachten Code zu einem späteren Zeitpunkt zum Drucksystem gehen kann, um sich dort seine Bilder bzw. Dokumente auszudrucken.

Vorzugsweise werden die Bilder und/oder Dokumente auf dem Mobiltelefon oder im Drucksystem oder auf dem Server aufbereitet. Eine Aufbereitung kann dabei insbesondere eine Anpassung an die Farbdarstellung des im Druckmodul enthaltenen Drucker darstellen. Ferner kann diese beispielsweise ein Retuschieren von roten Augen und Aufhellen bzw. Abdunkeln einzelner Bereiche umfassen. Ferner können beispielsweise Ausschnitte festgelegt werden und so diese Ausschnitte vergrößert wiedergeben werden. Aber auch weitere Aufbereitungen insbesondere durch vordefinierte oder variable Filter sind denkbar.

In einer bevorzugten Ausgestaltung kann der Druckauftrag von einem beliebigen internetfähigen Endgerät auf einen zentralen Server hochgeladen werden und vom Drucksystem nach Einlesen des maschinenlesbaren Codes vom Server heruntergeladen und ausgegeben werden. Dadurch kann der Nutzer den Druckauftrag von einer beliebigen Stelle mit Internetanschluss an den Server übermitteln und muss sich erst später entscheiden, bei welchem Drucksystem und über welches Druckmodul die Bilder bzw. Dokumente ausgegeben werden. Der Server stellt dabei einen zentralen Speicher dar, auf den alle damit verbundenen Drucksysteme unabhängig vom Ort ihrer Aufstellung zugreifen können. Dieser Zugriff wird dabei durch Einlesen des maschinenlesbaren Codes, der den abzuarbeitenden Druckauftrag eindeutig identifiziert, initialisiert.

Bevorzugterweise wird zur Auswahl eines Druckmoduls das entsprechende Druckmodul zunächst über Berührung eines berührungssensitiven Displays aktiviert und anschließend der maschinenlesbare Code über die Kamera eingelesen wird. Die Berührung des Displays weckt dabei insbesondere die Kamera auf, die dadurch immer nur über relativ kurze Zeit mit Strom versorgt werden muss. Somit wird ein Energieverbrauch geringgehalten und eine pausenlose Umgebungsüberwachung verhindert, die häufig aufgrund gesetzlicher Regelungen untersagt ist. Das berührungssensitive Display ist dabei insbesondere Teil der Bedienerschnittstelle des Druckmoduls.

In einer bevorzugten Ausgestaltung werden über den maschinenlesbaren Code unterschiedliche Benutzerebenen des Druckmoduls freigegeben. Der üblicherweise in Verbindung mit einem Druckauftrag erzeugte maschinenlesbare Code gibt dabei nur Basisfunktionen des Druckmoduls frei. Über einen anderen maschinenlesbaren Code können dann aber weitergehende Funktionen beispielsweise für einen Administrator freigeben werden, über die Einstellungen am Druckmodul und/oder Drucksystem eingesehen und verändert werden können. Auf relativ einfache Art erfolgt so eine Art Zugangskontrolle.

Vorzugsweise werden über den maschinenlesbaren Code zusätzliche Informationen in die Bilder und/oder Dokumente eingebracht. Bei diesen zusätzlichen Informationen kann es sich z.B. um Schnittmarken, Beschriftungen oder ähnliches handeln. Dabei kann insbesondere ein zusätzlicher Code eingelesen werden. Dieser zusätzliche Code kann nach dem für mit dem Druckauftrag zusammenhängenden Code vom Druckmodul eingelesen werden. Eine alternative Lösung kann vorsehen, dass dieser Code vom Endgerät, also beispielsweise dem Smartphone des Nutzers, eingelesen wird. Dieser kann anschließend durch Vorhalten des Endgeräts vor die Kamera vom Druckmodul eingelesen werden. Es ist auch denkbar, dass das Einlesen des zusätzlichen Codes zu einer definierten Änderung des Codes für den Druckauftrag führt, so dass vom Druckmodul nur ein einziger Code eingelesen werden muss.

Dabei ist besonders bevorzugt, dass vom Drucksystem zusätzliche Verbrauchsgegenstände wie Bilderrahmen bereitgestellt werden, die insbesondere jeweils mit einem zweiten maschinenlesbaren Code versehen sind. Die für diese Verbrauchsgegenstände gewünschten Informationen können dann durch Einlesen des zweiten maschinenlesbaren Codes im Druckauftrag berücksichtigt werden.

Vorteilhafterweise sind die Druckmodule eines Drucksystems miteinander vernetzt, wobei sie insbesondere die jeweiligen Speicher- und Rechenkapazitäten gemeinsam nutzen können. Das jeweilige Druckmodul benötigt dann keinen besonders leistungsfähigen Rechner, da die Rechner mehrerer Druckmodule zusammen im Bedarfsfall eine ausreichend große Leistung bereitstellen können. Zusätzlich kann eine zentrale Rechnereinheit vorgesehen sein, die insbesondere bedarfsweise zuschaltbar ist.

Bei einem Drucksystem zum Durchführen des Verfahrens nach einem der vorhergehenden Ansprüche ist erfindungsgemäß vorgesehen, dass es mindestens ein Druckmodul mit einem Drucker, einer Bedienerschnittstelle und einem Rechner aufweist, wobei die Bedienerschnittstelle eine Kamera zum Einlesen eines maschinenlesbaren Codes aufweist.

Durch Anzahl der Druckmodule, die zu einem Drucksystem zusammengefasst werden, kann eine bedarfsentsprechende Kapazität bereitgestellt werden. Dabei erfolgt eine direkte Bedienung und damit eine Belegung eines Druckmoduls durch einen Benutzer nur relativ kurze Zeit, die für das Einlesen des Codes und den eigentlichen Druckvorgang benötigt wird. Insgesamt lässt sich so eine hohe Auslastung des Drucksystems mit geringen Wartezeiten für die Bediener erreichen.

Dabei ist besonders bevorzugt, dass das Druckmodul ein quaderförmiges Gehäuse aufweist, wobei insbesondere mehrere Druckmodule übereinander und/oder nebeneinander angeordnet und miteinander vernetzt sind. Durch diese Ausgestaltung kann das Drucksystem gut an unterschiedliche räumliche Gegebenheiten angepasst werden. Insbesondere ist es so möglich, relativ viele Druckmodule auf engem Raum gut zugänglich unter zu bringen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: ein Druckmodul eines Drucksystems in räumlicher Ansicht,
- Fig. 2: das Druckmodul mit geöffnetem Frontteil,
- Fig. 3: ein Drucksystem mit mehreren Druckmodulen,
- Fig. 4: ein Drucksystem mit mehreren Druckmodulen und einem Multifunktionselement,
- Fig. 5: das Druckmodul mit einem Auffangelement in räumlicher Ansicht und
- Fig. 6: das Druckmodul nach Fig. 5 in Seitenansicht.

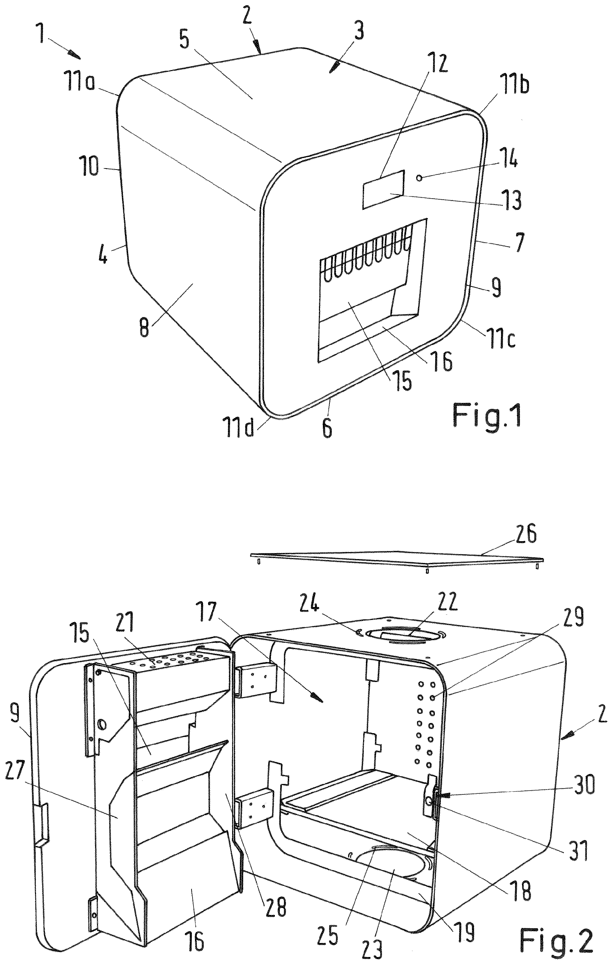

In Fig. 1 ist ein Drucksystem 1 mit einem Druckmodul 2 in räumlicher Darstellung dargestellt. Das Druckmodul 2 weist ein quaderförmiges Gehäuse 3 mit einem Korpus 4 auf. Der Korpus 4 umfasst ein Oberteil 5 und ein Bodenteil 6, die jeweils über Seitenteile 7, 8 derart miteinander verbunden sind, dass das Oberteil 5 und das Bodenteil 6 mit den beiden Seitenteilen 7, 8 den Korpus 4 in Form eines rechteckigen Rahmens ausbilden. Vorderseitig ist der Korpus 4 durch ein Frontteil 9 und rückseitig durch ein Rückenteil 10 geschlossen. Kanten 11a, 11b, 11c, 11d des Korpus', also Übergänge von den Seitenteilen 7, 8 zum Bodenteil 6 bzw. Oberteil 5 sind dabei relativ stark abgerundet. Dies ermöglicht eine einteilige bzw. einstückige Herstellung des Korpus 4 und minimiert beispielsweise das Risiko, dass ein Benutzer an diesen Kanten hängen bleibt. Dabei ist der Korpus 4 sowie das Frontteil 9 und das Rückenteil 10 vorzugsweise aus einem Kunststoff hergestellt.

Im Frontteil 9 ist eine Bedienerschnittstelle 12 ausgebildet. Die Bedienerschnittstelle 12 umfasst dabei eine berührungssensitive Anzeige 13, also ein sogenanntes Touch-Display, sowie eine Kamera 14.

Im Frontteil 9 ist ferner durch eine Entnahmeöffnung 15 ein ungehinderter Zugriff auf ein Entnahmefach 16 gegeben, das innenseitig am Frontteil 9 befestigt ist und somit innerhalb des Gehäuses 3 liegt. Das Entnahmefach 16 dient zur Aufnahme von fertig gestellten Druckmedien wie Bildern und/oder Dokumenten und überdeckt innenseitig die Entnahmeöffnung 15 derart, dass durch die Entnahmeöffnung 15 kein Zugang zu einem im Gehäuse 3 ausgebildeten Aufnahmeraum für einen Drucker möglich ist.

In Fig. 2 ist das Druckmodul 2 mit geöffnetem Frontteil 9 gezeigt. Das Frontteil 9 ist dafür schwenkbar am Seitenteil 8 befestigt und kann wie eine Tür geöffnet werden. Dadurch ist ein Zugang zum Inneren des Gehäuses möglich, in dem ein Aufnahmeraum 17 für einen Drucker ausgebildet ist. Der Aufnahmeraum 17 ist dabei durch einen Regalboden 18 unterteilt, auf den der Drucker positioniert wird. Der Regalboden 18 liegt dabei auf Stegen 19 auf, die innenseitig die Seitenteile 7, 8 miteinander verbinden und sich senkrecht vom Bodenteil 6 aus erstrecken. Dabei weisen die Stege 19 Vorsprünge auf, auf denen der Regalboden 18 in unterschiedlichen Höhen angeordnet werden kann. Dadurch kann eine Anpassung an unterschiedliche Drucker erfolgen.

An einer Innenseite des Frontteils 9 ist nicht nur das Entnahmefach 16, sondern auch ein Aufnahmefach 21 angeordnet. Das Aufnahmefach 21 befindet sich dabei auf einer Position, in der es die von einer Außenseite des Frontteils 9 sichtbare Bedienerschnittstelle 12 überdeckt. Im Aufnahmefach 21 ist ein Rechner in Form eines Mini-PC wie beispielsweise ein Raspberry Pi, untergebracht, der mit der Bedienerschnittstelle verbunden ist und einen im Aufnahmeraum 17 untergebrachten Drucker beispielsweise über USB (Universal Serial Bus) ansteuern kann. Ferner weist der Rechner drahtgebundene und drahtlose Netzwerkverbindungen auf.

Das Aufnahmefach 21 und das Entnahmefach 16 sind über Seitenwände 27, 28 miteinander verbunden und bilden somit eine Einheit. Dadurch ergibt sich eine hohe Stabilität mit einem relativ großen Kontaktbereich zur Innenseite 20 des Frontteils 9, das damit ebenfalls versteift wird.

Sowohl im Oberteil 5 als auch im Bodenteil 6 ist jeweils zentrisch eine runde Öffnung 22, 23 ausgebildet, die von teilkreisförmigen Schlitzen 24, 25 umgeben sind. Durch diese Öffnungen 22, 23 kann zum einen ein Luftaustausch und somit eine Kühlung des Aufnahmeraums 21 erfolgen, zum anderen können Leitungen zur Stromversorgung und Datenübertragung durch sie in das Innere des Gehäuses 3 geführt werden. Die Schlitze 24, 25 können für eine nicht dargestellte Befestigungsvorrichtung genutzt werden, um beispielsweise übereinander angeordnete Druckmodule 2 aneinander zu fixieren. Im einfachsten Falls wird die Befestigungsvorrichtung dabei durch mehrere Schrauben-Muttern Paarungen gebildet.

Eine Oberseite des Oberteils 5 kann durch ein Abdeckelement 26 abgedeckt werden. Bei diesem Ausführungsbeispiel weist das rechteckige Abdeckelement 26 in seinen Eckbereichen vorstehende Füße auf, die in entsprechende Ausnehmungen im Oberteil 5 eingedrückt werden können und das Abdeckelement 26 so am Korpus 4 halten. Alternativ könnte am Abdeckelement 26 auch eine Befestigungsgeometrie ausgebildet sein, mit der es in der Öffnung 22 oder den Schlitzen befestigt, insbesondere verrastet werden kann. Gegebenenfalls kann im Oberteil 5 eine Ausnehmung ausgebildet sein, um das Abdeckelement 26 mehr oder weniger bündig aufzunehmen.

Im Rückenteil 10 sind Lüftungsöffnungen 29 ausgebildet, deren Form und Anzahl variieren kann. Ferner sind für einen guten Luftaustausch und damit eine gute Kühlung des Aufnahmeraums 17 zwischen dem Frontteil 9 und dem Korpus 4 sowie zwischen dem Rückenteil 10 und dem Korpus 4 Lüftungsschlitze ausgebildet, die insbesondere parallel zum Korpus verlaufen und so schmal sind, dass sie bei flüchtiger Betrachtung nicht auffallen. Dennoch kann darüber eine gute Entlüftung erfolgen.

Das Frontteil 9 ist am Seitenteil 8 schwenkbar befestigt und am anderen Seitenteil 7 über eine Halteeinrichtung 30 festlegbar, die ein Schloss 31 umfasst, das über einen Schlüssel bedienbar ist. Ein unbefugtes Öffnen des Druckmoduls 2 kann damit zuverlässig verhindert werden. Anstelle eines mechanischen Schlosses 31 könnte alternativ beispielsweise auch ein Magnetschloss verwendet werden, was jedoch in der Regel keine Diebstahlsicherheit bietet.

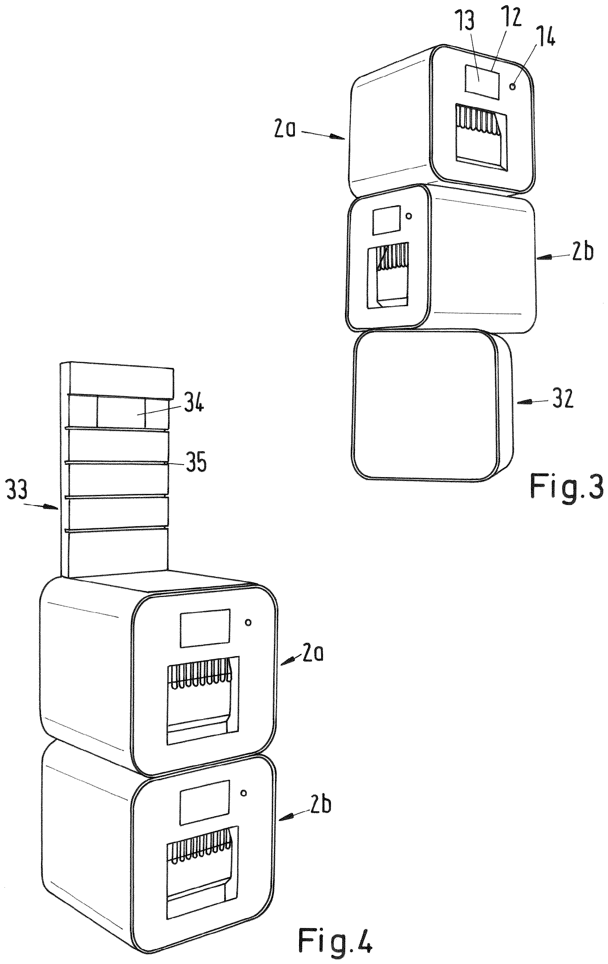

In Fig. 3 ist ein Drucksystem mit zwei übereinander angeordneten Druckmodulen 2a, 2b dargestellt, die auf einem weiteren Modul 32 angeordnet sind. Das weitere Modul 32 unterscheidet sich von den Druckmodulen 2a, 2b nur durch ein andersartiges Frontteil ohne Bedienerschnittstelle und Entnahmeöffnung. Im Übrigen ist das Modul 32 baugleich mit den Druckmodulen 2a, 2b und bietet zusätzlichen Stauraum, beispielsweise für Verbrauchsmaterialien.

Die Druckmodule 2a, 2b und das Modul 32 sind über nicht dargestellte Befestigungsvorrichtungen miteinander verbunden und in einem gewünschten Winkel um ihre Hochachse festgelegt. Dabei greifen die Befestigungsvorrichtungen in die teilkreisförmigen Schlitze, wobei eine Oberseite des obersten Druckmoduls 2a mit einem Abdeckelement versehen ist. Eine Versorgung der Druckmodule erfolgt dabei über Strom- und Datenleitungen, die unsichtbar durch die entsprechenden Öffnungen geführt sind.

In Fig. 4 ist ein weiteres Drucksystem mit zwei Druckmodulen 2a, 2b dargestellt, wobei an einer Oberseite des oberen Druckmoduls 2a ein Multifunktionselement 33 angeordnet ist, das sich senkrecht zur Oberseite des Druckmoduls 2a erstreckt. Das Multifunktionselement 33 weist bei diesem Beispiel eine Anzeige 34 sowie Nuten 35 auf, in die Klemmbretter, Haken und ähnliches eingebracht werden können.

Die Ausführungen nach Fig. 3 und Fig. 4 können natürlich problemlos miteinander und mit weiteren Druckmodulen kombiniert werden, um ein Drucksystem mit der jeweils gewünschten Kapazität zu erhalten. Dabei werden bevorzugterweise alle Druckmodule eines Drucksystems miteinander vernetzt und stellen ein gemeinsames Zugangsnetz, also einen sogenannten Hotspot, für die Benutzer zur Verfügung. Dabei können die Druckmodule insbesondere ihre jeweiligen Rechen- und Speicherkapazitäten gemeinsam nutzen. Die Auswahl des Druckmoduls für die Ausgabe der Bilder bzw. Dokumente erfolgt dann durch den Benutzer erst nach Auswahl und Hochladen der entsprechenden Dateien. Dabei erfolgt die Auswahl über die Bedienerschnittstelle beispielsweise durch Eingabe eines bestimmten Codes, wobei bevorzugterweise ein maschinenlesbarer Code, der beispielsweise auf dem Bildschirm des Mobiltelefons angezeigt wird, über die Kamera der Bedienerschnittstelle eingelesen wird. Der Druckvorgang kann dann sehr zeitnah starten, so dass das Druckmodul nach relativ kurzer Zeit bereits dem nächsten Benutzer zur Verfügung steht.

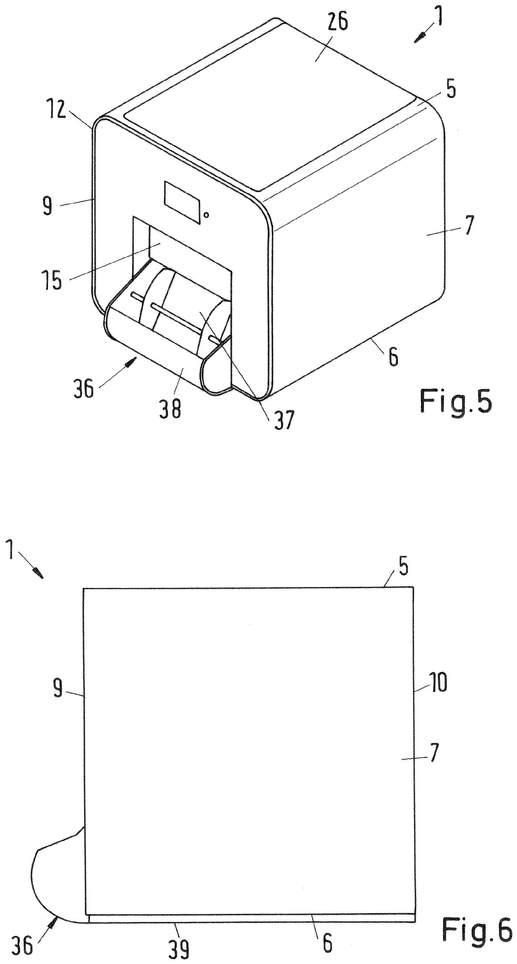

Fig. 5 zeigt das Druckmodul 1 in räumlicher Ansicht, wobei an einer Außenseite des Frontteils 9 ein Auffangelement 36 in der Entnahmeöffnung 15 für Druckmedien eingehängt. Längere Druckformate, wie Panoramadrucke oder Banner, werden dabei über erste Umlenkelemente 37 aus der Entnahmeöffnung 15 heraus geleitet und dann über ein zweites Umlenkelement 38 derart geführt, dass sie schließlich unter den Bodenteil 6 des Druckmoduls 1 gelangen.

Aus der Seitenansicht des Druckmoduls 1 gemäß Fig. 6 ist ersichtlich, dass die Druckformate dabei auf einem Fortsatz 39 abgelegt werden, der sich unterhalb des Druckmoduls 1 parallel zum Bodenteil 6 erstreckt.

Durch entsprechende, nicht dargestellte Füße bzw. Abstandshalter am Bodenteil 6 des Druckmoduls 1 steht für den Fortsatz 39 auch bei mehreren übereinander angeordneten Druckmodulen 1 ausreichend Raum zur Verfügung und der Fortsatz 39 wird durch das Gewicht des Druckmoduls 1 nicht belastet.

Beim erfindungsgemäßen Verfahren ist die Bedienung des Drucksystems für einen Bediener denkbar einfach. Nachdem er den Druckauftrag mit den zu druckenden Bildern bzw. Dokumenten ins Drucksystem hochgeladen hat, beispielsweise von einem Mobiltelefon über das drahtlose Zugangsnetzwerk des Drucksystems, muss er nur noch sein Mobiltelefon mit dem auf der Anzeige dargestellten maschinenlesbaren Code vor die Kamera halten, um den Druckvorgang z starten. Fehleingaben sind dabei so gut wie ausgeschlossen und die Bedienung auch ohne Einweisung möglich.

Mit Hilfe eines maschinenlesbaren Codes sind dabei auch weitere Funktionen abrufbar. Beispielsweise werden Bilderrahmen angeboten, die mit einem zweiten maschinenlesbaren Code versehen sind. Dieser kann ebenfalls in der Kamera eingelesen werden und fügt z.B. Schnittmarken zu den Bildern hinzu, so dass die Bilder relativ einfach an die Geometrie des Bilderrahmens angepasst werden können.

Desweiteren besteht die Möglichkeit, beispielsweise auf einem Schlüssel, der zum Öffnen des Druckmoduls benötigt wird, einen weiteren maschinenlesbaren Code aufzudrucken. Wenn dieser von der Kamera eingelesen wird, werden weitere Funktionalitäten frei geschaltet und beispielsweise die Veränderung von Einstellungen, die Anzeige von Zähler- und Füllständen und ähnliches ermöglicht.

Die Erfindung ist nicht auf eine der vorbeschriebenen Ausführungsformen beschränkt, sondern in vielfältiger Weise abwandelbar. So kann beispielsweise das Drucksystem auch mehr als die gezeigten Druckmodule umfassen. Auch könnte das Gehäuse anstelle der gezeigten Würfelform mit gleichlangen Kantenlängen auch in zumindest eine Raumrichtung verlängert sein.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 1: Drucksystem
- 2: Druckmodul
- 3: Gehäuse
- 4: Korpus
- 5: Oberteil
- 6: Bodenteil
- 7: Seitenteil
- 8: Seitenteil
- 9: Frontteil
- 10: Rückenteil
- 11: Kante
- 12: Bedienerschnittstelle
- 13: Berührungssensitive Anzeige
- 14: Kamera
- 15: Entnahmeöffnung
- 16: Entnahmefach
- 17: Aufnahmeraum
- 18: Regalboden
- 19: Steg
- 20: Innenseite
- 21: Aufnahmefach
- 22: Öffnung
- 23: Öffnung
- 24: Schlitz
- 25: Schlitz
- 26: Abdeckelement
- 27: Seitenwand
- 28: Seitenwand
- 29: Lüftungsöffnung
- 30: Halteeinrichtung
- 31: Schloss
- 32: Modul
- 33: Multifunktionselement
- 34: Anzeige
- 35: Nut
- 36: Auffangelement
- 37: erstes Umlenkelement
- 38: zweites Umlenkelement
- 39: Fortsatz

## Patentansprüche

1. Verfahren zum Betreiben eines Drucksystems zum Ausdrucken von Bildern und/oder Dokumenten, wobei das Drucksystem (1) mindestens ein Druckmodul (2) mit einem Drucker, einer Bedienerschnittstelle (12) und einem Rechner aufweist, wobei zur Freigabe eines vorab übermittelten Druckauftrages ein maschinenlesbarer Code über eine Kamera (14) des Druckmoduls (2) eingelesen wird.

2. Verfahren nach Anspruch 1, **dadurch gekennzeichnet, dass** vom Drucksystem (1) ein drahtloses Zugangsnetzwerk bereitgestellt wird.

3. Verfahren nach Anspruch 1 oder 2, **dadurch gekennzeichnet, dass** das Drucksystem (1) einen Web-Zugang hostet, der einen browserbasierten Zugang zum Erstellen des Druckauftrags bereitstellt.

4. Verfahren nach einem der vorhergehenden Ansprüche, **dadurch gekennzeichnet, dass** die Erstellung des Druckauftrags durch Auswahl der Bilder und/oder Dokumente in einem Programm offline erfolgen kann, wobei die Bilder und/oder Dokumente zu einem späteren Zeitpunkt zum Drucksystem oder einem mit dem Drucksystem zugeordneten Server übertragen werden

5. Verfahren nach einem der vorhergehenden Ansprüche, **dadurch gekennzeichnet, dass** der maschinenlesbare Code nach Hochladen des Druckauftrags zum Drucksystem oder einem dem Drucksystem zugeordneten Server erzeugt und an das hochladende Gerät übermittelt wird.

6. Verfahren nach einem der vorhergehenden Ansprüche, **dadurch gekennzeichnet, dass** das der maschinenlesbare Code auf ein Mobiltelefon übertragen wird und über die Kamera des Drucksystems von einer Anzeige des Mobiltelefons ausgelesen wird.

7. Verfahren nach einem der vorhergehenden Ansprüche, **dadurch gekennzeichnet, dass** der maschinenlesbare Code auf ein Druckmedium ausgegeben wird und von dort über die Kamera des Drucksystems ausgelesen wird.

8. Verfahren nach einem der vorhergehenden Ansprüche, **dadurch gekennzeichnet, dass** die Bilder und/oder Dokumente auf dem Mobiltelefon oder im Drucksystem oder auf dem Server aufbereitet werden.

9. Verfahren nach einem der vorhergehenden Ansprüche, **dadurch gekennzeichnet, dass** der Druckauftrag von einem beliebigen internetfähigen Endgerät auf einen zentralen Server hochgeladen wird und vom Drucksystem nach Einlesen des maschinenlesbaren Codes heruntergeladen und ausgegeben wird.

10. Verfahren nach einem der vorhergehenden Ansprüche, **dadurch gekennzeichnet, dass** zur Auswahl eines Druckmoduls das entsprechende Druckmodul zunächst über Berührung eines berührungssensitiven Displays aktiviert wird und anschließend der maschinenlesbare Code über die Kamera eingelesen wird.

11. Verfahren nach einem der vorhergehenden Ansprüche, **dadurch gekennzeichnet, dass** über den maschinenlesbaren Code unterschiedliche Benutzerebenen des Druckmoduls freigegeben werden.

12. Verfahren nach einem der vorhergehenden Ansprüche, **dadurch gekennzeichnet, dass** über den maschinenlesbaren Code zusätzliche Informationen in die Bilder und/oder Dokumente eingebracht werden.

13. Verfahren nach einem der vorhergehenden Ansprüche, **dadurch gekennzeichnet, dass** vom Drucksystem zusätzliche Verbrauchsgegenstände wie Bilderrahmen bereitgestellt werden, die insbesondere jeweils mit einem maschinenlesbaren Code versehen sind.

14. Verfahren nach einem der vorhergehenden Ansprüche, **dadurch gekennzeichnet, dass** die Druckmodule eines Drucksystems miteinander vernetzt sind, wobei sie insbesondere die jeweiligen Speicher- und Rechenkapazitäten gemeinsam nutzen können.

15. Drucksystem (1) zum Durchführen des Verfahrens nach einem der vorhergehenden Ansprüche, **dadurch gekennzeichnet, dass** es mindestens ein Druckmodul (2) mit einem Drucker, einer Bedienerschnittstelle (12) und einem Rechner aufweist, wobei die Bedienerschnittstelle (12) eine Kamera (14) zum Einlesen eines maschinenlesbaren Codes aufweist.

16. Drucksystem nach Anspruch 15, **dadurch gekennzeichnet, dass** das Druckmodul (2) ein quaderförmiges Gehäuse (3) aufweist, wobei insbesondere mehrere Druckmodule (2) übereinander und/oder nebeneinander angeordnet und miteinander vernetzt sind.
